# EUROPEAN PATENT APPLICATION

(11) **EP 4 752 417 A1**
(43) Date of publication of application: **03.06.2026**
(21) Application number: 24215092.8
(22) Date of filing: 27.11.2024
(51) Int. Cl.: F16K 31/04, F16K 31/05, F16K 31/53

(54) **ROTARY MOTORIC ACTUATOR**

(71) Applicant: Pittway Sarl, 1180 Rolle (CH)
(72) Inventor: BRABAC, Jan, 67961 Letovice (CZ); LOKVENC, Matin, 54931 Vysoká Srbská (CZ); VECHET, Jiri, 64300 Brno - Chrlice (CZ)
(74) Representative: Murgitroyd & Company

(57) **Abstract**

The present disclosure relates to a rotary motoric actuator system configured for precise control of valves in fluid management systems, such as HVAC and industrial processes. The actuator addresses limitations of conventional systems by providing enhanced protection for internal components and improved visibility of the actuator's position. The actuator supports various control signals, including proportional voltage, floating 3-point, and can be controlled using wireless RF signals, allowing for flexible operation. Some embodiments include a shaft position indicator for clear visual reference, a declutch mechanism, and a mode selector for seamless transition between manual and automated modes. The actuator also includes a signal selector for choosing control signal ranges and a wiring access port for secure electrical connections. A novel seal arrangement protects against dust and moisture, ensuring durability. Compatible with a wide range of rotary valves, the actuator offers an improved solution for modern fluid management systems.

## Description

### FIELD OF THE DISCLOSURE

The present disclosure relates to fluid management systems, and more particularly, to a rotary motoric actuator system for controlling valve positions in heating, ventilation and air conditioning (HVAC) systems and industrial processes.

### BACKGROUND

Conventional actuators suffer from a number of limitations. First, conventional actuators require exposure to internal components during installation. These actuators are commonly used in environments such as factories that may have dust, debris, or even fluid in the area of installation. The exposure of the printed wiring board during installation increases the risk of damage, leading to potential malfunctions. Additionally, many places where actuators are installed have limited lighting. The lack of clear visual indicators for a conventional actuator's position complicates operation, making it difficult for users to ascertain the device's status at a glance.

### SUMMARY

The instant disclosure is directed to a rotary motoric actuator system designed for precise control of valves in fluid management systems, such as HVAC and industrial processes. The actuator addresses limitations of conventional systems by providing enhanced protection for internal components and improved visibility of the actuator's position. The actuator includes a novel cover arrangement that minimizes exposure to dust, debris, and moisture, ensuring reliable operation in challenging environments, while at the same time improving control over one or more features.

One such feature of the actuator is its ability to receive and respond to various control signals, including proportional voltage, floating 3-point, and wireless RF signals. This flexibility allows for precise and adaptable operation, making it suitable for diverse applications. The actuator includes a shaft position indicator that provides a clear visual reference of the valve's position, even in low-light conditions, enhancing user interaction and reducing the risk of errors.

The actuator system incorporates a declutch mechanism and a mode selector, enabling seamless transition between manual and automated modes. This ensures safety by preventing simultaneous manual and remote operations, which could lead to unintended valve states.

Additionally, the actuator is equipped with a signal selector that allows users to choose between different control signal ranges, such as 0-10V and 2-10V, as well as floating point control. These features provide fine control over fluid flow, making the actuator ideal for applications requiring precise regulation. The actuator also includes a wiring access port that facilitates electrical connections without exposing internal components to environmental hazards.

Other features and advantages of the actuator system will be apparent from the detailed description of the actuator as presented below.

### DESCRIPTIONS OF THE DRAWINGS

The features and advantages of the disclosure will be apparent from the following description of embodiments as illustrated in the accompanying drawings, in which reference characters refer to the same parts throughout the various views. The drawings are not necessarily to scale, emphasis instead being placed upon illustrating principles of the disclosure:
FIG. 1 illustrates a front view of the actuator, highlighting the declutch mechanism and manual mode indicator according to some embodiments of the present disclosure;
FIG. 2 shows a top view of the actuator, showing the mode indicator in the form of a light pipe which includes one or more LEDs according to some embodiments of the present disclosure;
FIG. 3 depicts the actuator's ports, including power supply and signal input/output connections, according to some embodiments of the present disclosure;
FIG. 4 shows a side view of the actuator with the access panel in place according to some embodiments of the present disclosure.
FIG. 5 illustrates the signal selector within the actuator according to some embodiments of the present disclosure;
FIG. 6 shows the actuator's manual lever and an example coupling to the valve stem according to some embodiments of the present disclosure;

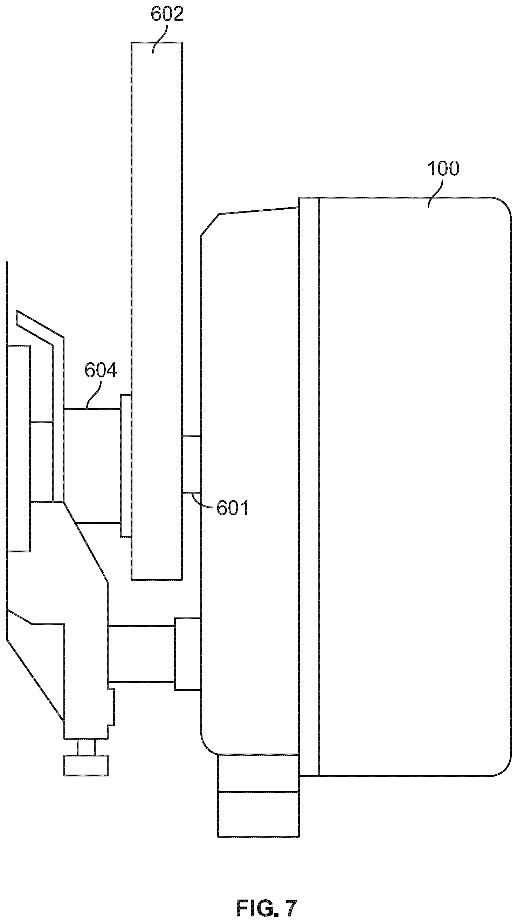

FIG. 7 shows an assembled view of FIG. 6 according to some embodiments of the present disclosure; and
FIG. 8 depicts a novel seal arrangement designed to protect the actuator's internal components against dust and moisture, enhancing durability in challenging environments according to some embodiments of the present disclosure.

### DETAILED DESCRIPTION

According to some embodiments, the instant disclosure provides novel mechanisms for a modulating actuator system that can operationally control a position(s) of valves in fluid management systems, such as hydronic heating, cooling, industrial processes, and the like, as one of skill in the art would readily understand from the disclosure herein.

The disclosure will now be described more fully hereinafter with reference to the accompanying drawings, which form a part hereof, and which show, by way of non-limiting illustration, certain example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. Accordingly, some embodiments may, for example, take the form of hardware, software, firmware or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in some embodiments" as used herein does not necessarily refer to the same embodiment and the phrase "in another embodiment" as used herein does not necessarily refer to a different embodiment. It is intended, for example, that claimed subject matter include combinations of example embodiments in whole or in part.

In general, terminology may be understood at least in part from usage in context. For example, terms, such as "and", "or", or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

According to some embodiments, one or more actuator functions may be implemented by execution of instructions stored on non-transitory computer readable media. For the purposes of this disclosure a non-transitory computer readable medium (or computer-readable storage medium/media) stores computer data, which data can include computer program code (or computer-executable instructions) that is executable by a computer, in machine readable form. By way of example, and not limitation, a computer readable medium may include computer readable storage media, for tangible or fixed storage of data, or may include communication media for transient interpretation of code-containing signals, such as RF signals. Computer readable storage media, as used herein, refers to physical or tangible storage (as opposed to signals) and includes non-volatile, removable and non-removable media implemented in any method or technology for the tangible storage of information such as computer-readable instructions, data structures, program modules or other data. Computer readable storage media includes, but is not limited to, RAM, ROM, EPROM, EEPROM, flash memory or other solid state memory technology, optical storage, cloud storage, magnetic storage devices, or any other physical or material medium which can be used to tangibly store the desired information or data or instructions and which can be accessed by a computer or processor.

One or more actuator functions for controlling a valve may be initiated through a server. For the purposes of this disclosure the term "server" should be understood to refer to a service point which provides processing, database, and communication facilities. By way of example, and not limitation, the term "server" can refer to a single, physical processor with associated communications and data storage and database facilities, or it can refer to a networked or clustered complex of processors and associated network and storage devices, as well as operating software and one or more database systems and application software that support the services provided by the server. Cloud servers are examples.

The actuator system described herein may be coupled to a network. For the purposes of this disclosure a "network" should be understood to refer to a network that may couple devices so that communications may be exchanged, such as between a server and a client device or other types of devices, including between wireless devices coupled via a wireless network, for example. A network may also include mass storage, such as network attached storage (NAS), a storage area network (SAN), a content delivery network (CDN) or other forms of computer or machine-readable media, for example. A network may include the Internet, one or more local area networks (LANs), one or more wide area networks (WANs), wire-line type connections, wireless type connections, cellular or any combination thereof. Likewise, sub-networks, which may employ differing architectures or may be compliant or compatible with differing protocols, may interoperate within a larger network.

While various configurations of the disclosed actuator may send and receive information using radio frequency (RF), in general all example configurations can be fitted for control over or via a wireless network. For purposes of this disclosure, a "wireless network" should be understood to couple client devices (e.g., SCADA) with a network. A wireless network may employ stand-alone ad-hoc networks, mesh networks, Wireless LAN (WLAN) networks, cellular networks, or the like. A wireless network may further employ a plurality of network access technologies, including Wi-Fi, Long Term Evolution (LTE), WLAN, Wireless Router mesh, or 2nd, 3rd, 4th or 5th generation (2G, 3G, 4G or 5G) cellular technology, mobile edge computing (MEC), Bluetooth, 802.11b/g/n, or the like. Network access technologies may enable wide area coverage for devices, such as client devices with varying degrees of mobility, for example.

In short, a wireless network may include virtually any type of wireless communication mechanism by which signals may be communicated between devices, such as a client device or a computing device, between or within a network, or the like.

For the processing of commands sent over a wireless network, the actuator may include and/or have associated therewith a processor(s), microprocessor, controller and/or one or more computing devices (components). A computing device, which may include one or more computers, may be capable of sending or receiving signals, such as via a wired or wireless network, or may be capable of processing or storing signals, such as in memory as physical memory states, and may, therefore, operate as a server. Thus, devices capable of operating as a server may include, as examples, dedicated rack-mounted servers, desktop computers, laptop computers, set top boxes, and/or one or more actuators.

Commands for actuator controls are generally sent from a client device. For purposes of this disclosure, a client (or user, entity, subscriber or customer) device may include a computing device capable of sending or receiving signals, such as via a wired or a wireless network. A client device may, for example, include a desktop computer or a portable device, such as a cellular telephone, a smart phone, a display pager, a radio frequency (RF) device, an infrared (IR) device a Near Field Communication (NFC) device, a Personal Digital Assistant (PDA), a handheld computer, a tablet computer, a phablet, a laptop computer, a set top box, a wearable computer, smart watch, an integrated or distributed device combining various features, such as features of the forgoing devices, or the like.

In some embodiments, a client can include one or more components of an actuator, and/or the system to which the actuator is coupled (e.g., HVAC); some non-limiting examples include computer controlled dampers, thermometers, vents, heat exchangers, air exchanges, humidifiers, dehumidifiers, fans, blowers, smart electrical meters, compressors, and/or any component of a conventional climate control system that is configured to send and/or receive signals and/or provide automated mechanical component actuation. A client device may vary in terms of capabilities or features. Claimed subject matter.

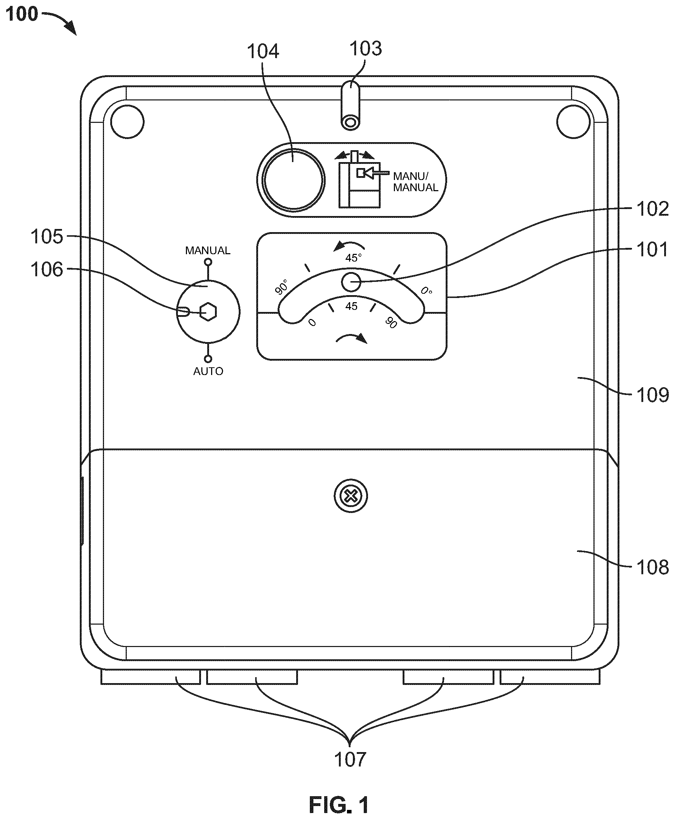

Turning now to FIG. 1, an actuator 100 according to the present disclosure is depicted. The actuator 100 is configured to receive and respond to a variety of control signals, including proportional voltage signals, floating 3-point control signals, and wireless RF signals, allowing for both precise and flexible operation of valves and dampers in various applications.

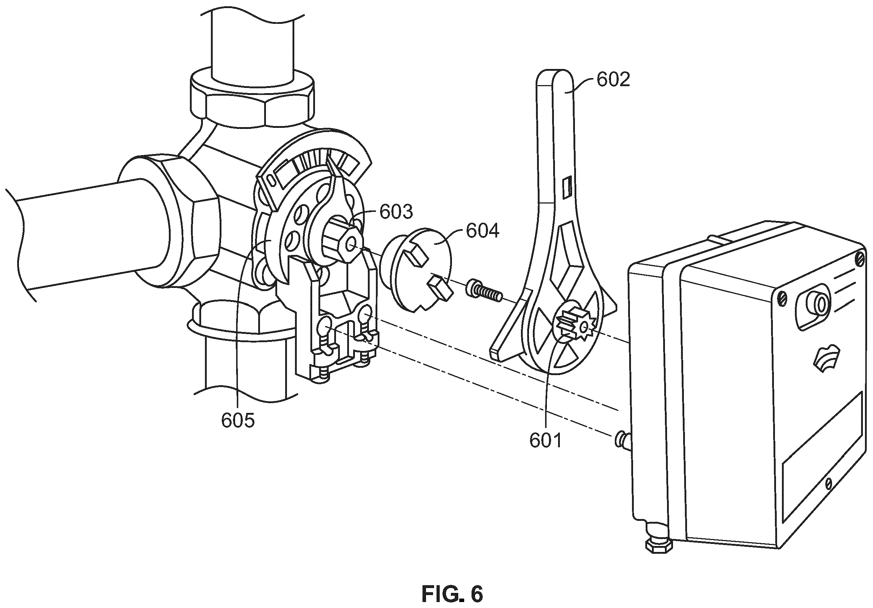

As illustrated in FIG. 1, the actuator 100 includes a shaft position indicator 101, which includes a mechanical or electromechanical display of a current position of the valve shaft. In some embodiments, the shaft position indicator 101 includes a curved dial display with a single marking 102 to indicate the angular position of the shaft 601 (see FIG. 6) to which the actuator 100 is coupled, in this case ranging from 0° to 90°. The shaft 601 may be part of a manual lever 602, or may project from the actuator 100 and couple to the manual lever 602, with the earlier arrangement shown in this non-limiting example, as illustrated in FIG. 6.

As the shaft 601 rotates, the single marking 102, shown in FIG. 1 as a circular point, although other shapes are contemplated, provides a direct visual reference of the shaft's current position. This is an improvement upon conventional dial indicators which use a needle or other visual aids, as the single point contrast against a lighter background enables accurate determination of position even in low light conditions. In some embodiments, the single point shaft position indicator 101 is mechanically coupled to the valve stem 603, which can ensure a mechanical output that is not subject to drift, and therefore does not need recalibration once installed.

As shown in FIG. 6, the system may include a manual lever 602 configured to couple to the valve stem 603 and the actuator stem at the back of the actuator 100. In some embodiments, the system includes a lever coupling 604 configured to couple the manual lever 602 to the valve stem 603.

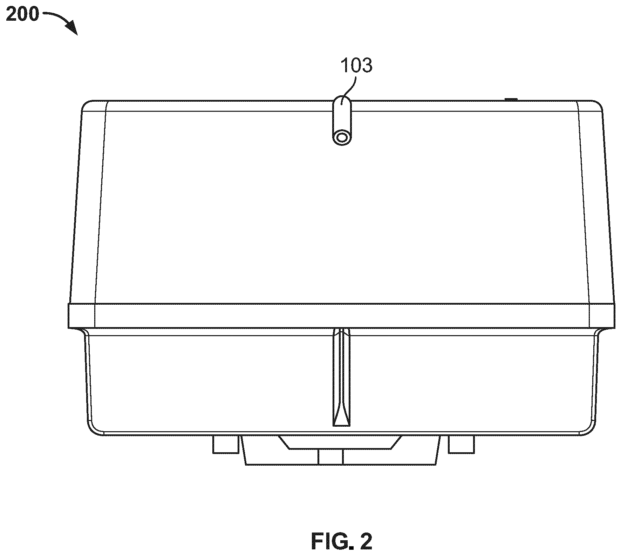

As shown in the front view 100 of FIG. 1, the actuator 100 includes a declutch mechanism 104 (e.g., button, switch, actuator) configured to enable manual manipulation of the actuator 100 and/or valve stem 603. In some embodiments, initiation of the declutch mechanism 104 is configured to actuate a mode indicator 103 which includes a light in this non-limiting example. As shown in FIG. 2, the mode indicator 103, which includes a light pipe with one or more LEDs in some embodiments, is configured to provide a visual indication of movement status, reached position, connectivity, and/or errors. In some embodiments, the declutch mechanism 104 includes a button that enables manipulation of the manual lever 602 when pushed. In some embodiments, a manual mode is initiate by rotating selector 105 to the "MANUAL" position and then pressing the declutch mechanism 104.

By way of background, problems with conventional systems arise when an actuator receives a control signal for the valve at the same time that manual operation is attempted. These problems include loss of home position as well as unintended changing of valve state, putting personnel at risk.

To solve this problem, among others, in some embodiments, the actuator 100 includes a mode selector 105 that is configured to override and/or disconnect the actuator 100 from any remote control signals it may receive during manual operation. In addition to a manual setting, the mode selector 105 includes an auto position configured to allow remote control of the actuator 100 to resume after maintenance. In some embodiments, while the mode selector 105 is in auto, the actuator 100 is configured to prevent manual manipulation of one or more of the declutch mechanism 104, the manual mode indicator 104, and the manual lever 602, improving safety of the device as well as the system to which it controls. In some embodiments, the mode selector 105 includes key slot 106 (e.g., hexagonal recess) configured to mate with a key (e.g., hexagonal key, Allen wrench) to ensure there is no unintentional rotation of the mode selector 105, further improving safety.

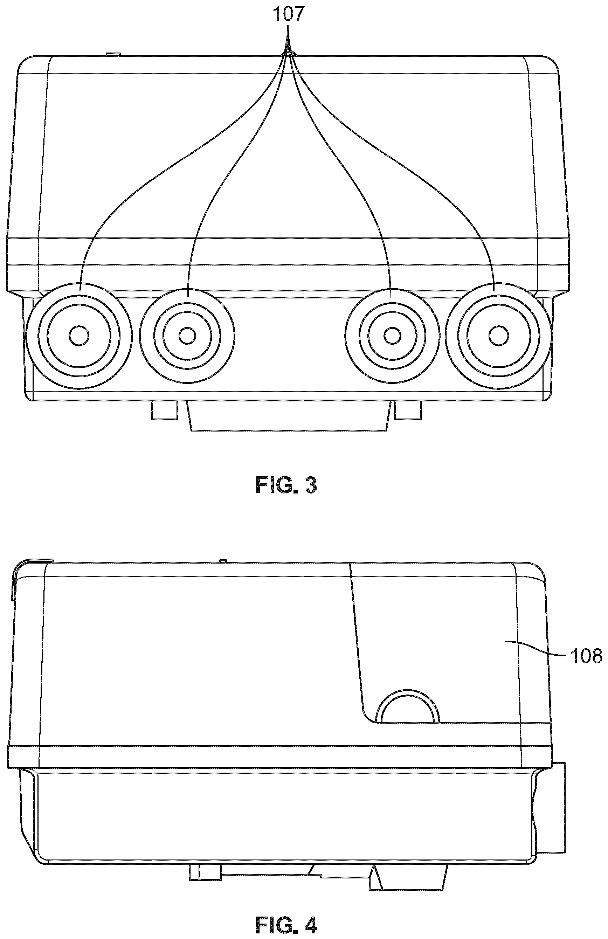

Turning now to FIG. 3, the actuator 100 may include one or more ports 107 at the bottom of the housing. The one or more ports may include power supply connections and/or signal input/output connections, as non-limiting examples, and include seals configured to meet environmental protection ratings (IP ratings) to protect against dust, moisture, and contaminants. A side view for an access panel cover 108 which protects one or more components configured to control one or more aspects of the actuator 100 is depicted in FIG. 4.

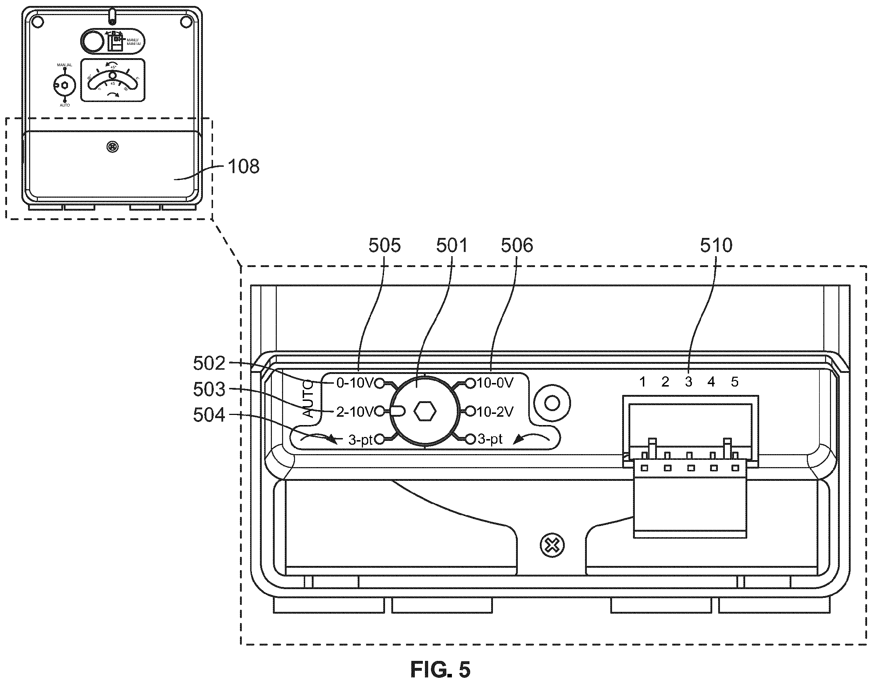

FIG. 5 shows a front view of the actuator 100 with the access panel cover 108 removed. Instead of the printed control board (PCB; not shown) for the actuator 100 being exposed when the access panel cover 108 is removed, the actuator 100 of the present disclosure is configured to provide adjustments for control signal type and wiring connections while sealing the PCB and/or internal components from the surrounding environment.

In some embodiments, the actuator 100 includes a signal selector 501 configured to enable an operator to select a 0-10V proportional voltage signal position 502 which ranges from 0 to 10 volts (V). This feature allows for continuous modulating control, wherein the position of the valve is determined based on the magnitude of the input signal. For instance, a 0V input will cause the valve to remain fully closed, while a 10V input will fully open the valve. Intermediate voltages will proportionally adjust the valve position, providing fine control over fluid flow, making the actuator ideal for applications where precise regulation of flow is necessary, such as HVAC systems or industrial fluid control systems.

In some embodiments, the signal selector 501 includes a 2-10V proportional signal position 503, which serves to prevent movement of the valve until the input voltage exceeds a 2V threshold. This ensures a fail-safe operation by minimizing the possibility of unintended valve operation due to minor fluctuations or noise in the control signal. Once the 2V threshold is reached, the actuator 100 begins modulating the valve.

In some embodiments, the actuator 100 is configured to execute operation using a floating 3-point control signal 504. In this mode, the actuator 100 moves incrementally in response to directional control signals, which command the actuator 100 to either open or close the valve. In some embodiments, a first signal causes the actuator 100 to rotate in one direction (e.g., to open the valve), while a second signal causes movement in the opposite direction (e.g., to close the valve). The actuator 100 remains in its current position when neither signal is active, a state referred to as "floating."

Floating 3-point control is particularly useful in systems that do not require precise control of valve position but instead benefit from incremental adjustments based on the time the control signals are active. For instance, in a heating zone control system, the actuator 100 may be commanded to incrementally open the valve based on temperature demands, with each command pulse moving the valve slightly more open or closed. In a typical heating, ventilation, and air conditioning (HVAC) implementation, the actuator 100 can be paired with a building management system (BMS) that sends floating signals (or proportional signals) to control zone valves for heating or cooling.

In some embodiments, the signal selector 501 can be set to where an increase in voltage can cause the valve stem 603 to be turned in a clockwise 505 or counterclockwise 506 position, with each type of control available in both rotational directions.

Still referring to FIG. 5, wiring access port 510 for the actuator 100 is depicted next to the signal selector 501, and is also accessible by removing the access panel cover 108 in accordance with some embodiments. In some embodiments, terminal 1 is configured to be a power supply terminal, supplying a path for power or return power from the internal motor. In some embodiments, terminal 2 and terminal 3 are configured to be motor control terminals, which respectively control the actuator's clockwise and counterclockwise movements. In some embodiments, terminals A and B represent additional feedback and/or auxiliary connections, which can be non-limiting example which include position feedback and/or end switch contacts. In general, the wiring access port is configured to enable electrical connection to the PCB of the actuator 100 without exposing the PCB to the surrounding environment.

In some embodiments, the actuator 100 is configured for radio frequency (RF) wireless control, which eliminates the need for physical wiring between a central control system (e.g., SCADA system) and the actuator 100. In some embodiments, one or more components include a wireless transmission network, which may include an RF module configured to operate on industry-standard frequencies (e.g., 868 MHz or 915 MHz), allowing the actuator 100 to be controlled remotely via a central control system.

In some embodiments, the actuator 100 includes a controller coupled to the housing configured to execute internal diagnostics, which continuously monitor the motor's performance, control electronics, and mechanical movement. If any issues are detected, such as motor overload or communication failure, the actuator 100 triggers an alarm, alerting the controller to the issue, which can then be transmitted by the wireless network, or through one or more wired connections.

In some embodiments, the actuator 100 includes a synchronous motor that rotates the actuator's spindle by 90°. End switches built into the actuator 100 ensure that the motor stops when the valve reaches its fully open or fully closed position. The actuator 100 is configured to mechanically couple to a valve 605, and can apply forces from 10 Nm up to 40 Nm to match various valve sizes (e.g., DN 15 to DN 200), and may include a wider or narrower range depending on system requirements. The actuator 100 according to the present disclosure is compatible with a wide range of rotary valves, including the DRG/DR/DRU/DRR/ZR series, which are commonly used in HVAC systems.

Non-limiting suitable power supply for the actuator 100 ranges between 230 V AC or 24 V AC at a frequency of 50-60 Hz, depending on the specific requirements for the application. In some embodiments, the actuator 100 consumes about 3.5 W during normal operation, making it an energy-efficient solution for temperature control applications.

In some embodiments, the actuator 100 is configured to operate within a temperature range of 0°C to 60°C, while the valve it controls can handle water temperatures between 2°C and 130°C, making the actuator 100 versatile enough to be used in both residential and industrial applications, where fluid temperatures can vary significantly.

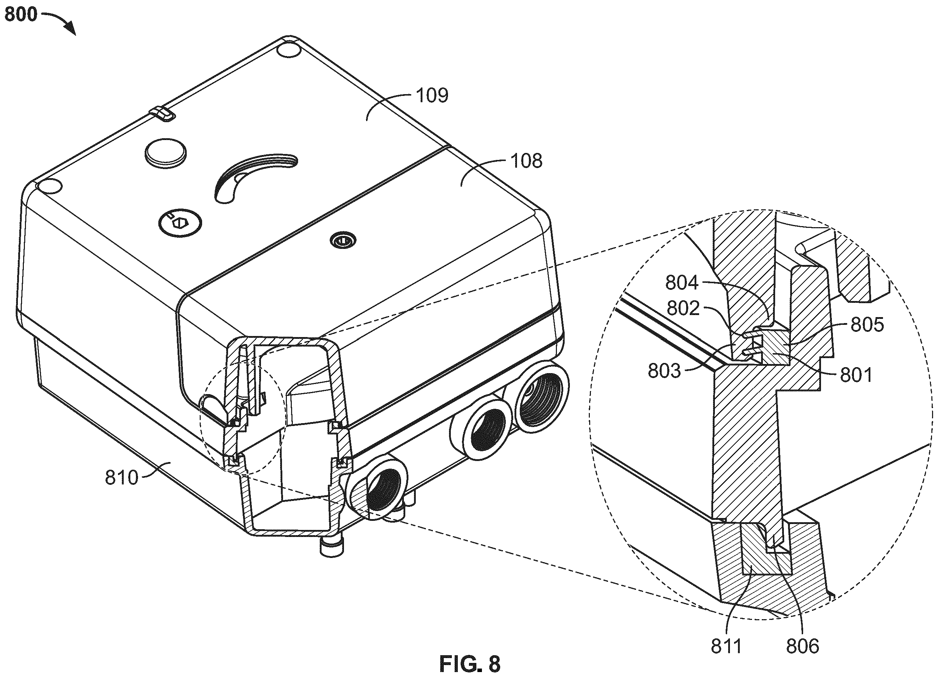

Turning now to FIG. 8, in some embodiments, the actuator 100 includes a novel seal arrangement 800 configured to protect internal components against dust and splashing from any direction. The seal arrangement 800 is particularly useful in outdoor or industrial environments where exposure to dust and moisture is common.

In some embodiments, the actuator 100 includes two main covers, the internal component cover 109 and the access panel cover 108. In some embodiments, the access panel cover 108 includes a dual projection seal 801, which includes two projections (e.g., rubber projections) 802, 803 configured to mate with two recesses on the access panel cover 108. The access panel cover 108 may include a seal lip 804 configured to overlap at least a portion of the seal main body 805, which is distal from the edges of the dual seal projections 802, 803. The seal lip 804 helps to force the entire seal against the component cover, ensuring an even seal around the access panel edges. This dual projection seal arrangement provides an improved configuration for keeping out debris, as well as lowering friction during assembly and disassembly, as the access panel is subject to more frequent manipulation than the component cover.

In some embodiments, the component housing 810 cover includes an L-shaped seal 811 configured to engage a component cover projection 806. In some embodiments, the L-shaped seal 811 allows for the component cover's removal, while ensuring the internal components are protected when the component cover 109 is attached to the component housing 810 in accordance with some embodiments.

In some embodiments, the actuator system described herein includes one or more of a component housing, a component cover, and an access panel. In some embodiments, the component housing is configured to couple to the component cover. In some embodiments, the component cover is configured to be removed from the component housing without moving one or more actuator components coupled to an inner portion of the component housing. In some embodiments, the component cover includes a shaft position indicator. In some embodiments, the component cover includes a declutch mechanism. In some embodiments, the component cover includes the access panel.

In some embodiments, the shaft position indicator includes a curved dial display with markings to indicate an angular position range. In some embodiments, the angular position range is 0° to 90°. In some embodiments, the declutch mechanism is configured to enable manual manipulation of the actuator. In some embodiments, the component cover further includes a mode selector. In some embodiments, the mode selector is configured to enable a user to change the actuator from an automated mode to a manual mode.

In some embodiments, the actuator can be configured to prevent manual manipulation of the actuator until the manual mode is selected by the user. In some embodiments, the mode selector requires the use of a key to switch from automated mode to manual mode. In some embodiments, the actuator further includes a manual lever. In some embodiments, the manual lever is configured to couple to the actuator between the component housing and a valve to which the actuator is to be installed.

In some embodiments, the component cover includes a signal selector. In some embodiments, the signal selector is configured to enable a user to switch between proportional control signal and floating control signal. In some embodiments, the proportional control signal includes a 0-10 volt range and a 2-10 volt range. In some embodiments, the signal selector requires the use of a key to manipulate. In some embodiments, the signal selector is configured to be sealed from the surrounding environment by the access cover.

In some embodiments, the component cover includes a wiring access port. In some embodiments, the wiring access port is configured to enable electrical connection to the actuator without exposing components between the component cover and component housing to the environment in which the actuator is located. In some embodiments, the wiring access port includes at least five wire connections. In some embodiments, the wiring access port includes connections for actuator motor control.

In some embodiments, the component housing includes a seal recess configured to receive an L-shaped seal. In some embodiments, the component cover includes a seal projection configured to mate with a portion of the L-shaped seal in the seal recess. In some embodiments, the access panel includes a dual projection seal. In some embodiments, the dual projection seal includes two projections configured to mate with two recesses within the access panel. In some embodiments, the access panel includes a seal lip configured to engage a portion of the dual projection seal distal from the two projections.

It is understood that the system is not limited in its application to the details of construction and the arrangement of components set forth in the previous description or illustrated in the drawings. The system and methods disclosed herein fall within the scope of numerous embodiments. The previous discussion is presented to enable a person skilled in the art to make and use the system according to some embodiments. Any portion of the structures and/or principles included in some embodiments can be applied to any and/or all embodiments: it is understood that features from some embodiments presented herein are combinable with other features according to some other embodiments. Thus, all embodiments of the system are not intended to be limited to what is illustrated but are to be accorded the widest scope consistent with all principles and features disclosed herein.

Some embodiments of the system are associated with specific values and/or setpoints. These values and setpoints are not intended to be limiting and are merely examples of a higher configuration versus a lower configuration and are intended as an aid for those of ordinary skill to make and use the system.

Any text in the drawings is part of the system's disclosure and is understood to be readily be incorporated into any description of the metes and bounds of the system. Any functional language in the drawings is a reference to the system being configured to perform the recited function, and structures shown or described in the drawings are to be considered as the system comprising the structures recited therein. It is understood that defining the metes and bounds of the system using a description of images in the drawing does not need a corresponding text description in the written specification to fall within the scope of the instant disclosure.

It is understood that the phraseology and terminology used herein is for description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The previous detailed description is to be read with reference to the figures, in that, like elements in different figures have like reference numerals. The figures, which are not necessarily to scale, depict some embodiments and are not intended to limit the scope of embodiments of the system.

It will be appreciated by those skilled in the art that while the system has been described above in connection with some embodiments and examples, the system is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the system are set forth in the following claims.

## Claims

1. An actuator comprising:
a component housing,
a component cover, and
an access panel;
wherein the component housing is configured to couple to the component cover;
wherein the component cover is configured to be removed from the component housing without moving one or more actuator components coupled to an inner portion of the component housing;
wherein the component cover includes a shaft position indicator;
wherein the component cover includes a declutch mechanism; and
wherein the component cover includes the access panel.

2. The actuator of claim 1, wherein the shaft position indicator includes a curved dial display with markings to indicate an angular position range.

3. The actuator of claim 2, wherein the angular position range is 0° to 90°.

4. The actuator of claim 1, wherein the declutch mechanism is configured to enable manual manipulation of the actuator.

5. The actuator of claim 4, wherein the component cover further includes a mode selector; and wherein the mode selector is configured to enable a user to change the actuator from an automated mode to a manual mode.

6. The actuator of claim 5, wherein the mode selector is configured to prevent automatic control of the actuator when the manual mode is selected by the user and/or .
the mode selector requires a use of a key to switch from the automated mode to the manual mode.

7. The actuator of claim 6, further including a manual lever configured to couple to the actuator between the component housing and a valve to which the actuator is to be installed.

8. The actuator of claim 1, wherein the component cover includes a signal selector.

9. The actuator of claim 8, wherein the signal selector is configured to enable a user to switch between proportional control signal and floating control signal.

10. The actuator of claim 9, wherein the proportional control signal includes a 0-10 volt range and a 2-10 volt range and/or wherein the signal selector requires a use of a key to manipulate the signal selector and/or wherein the signal selector is configured to be sealed from a surrounding environment by the access panel.

11. The actuator of claim 1, wherein the component cover includes a wiring access port.

12. The actuator of claim 11, the wiring access port is configured to enable electrical connection to the actuator without exposing components between the component cover and the component housing to a surrounding environment.

13. The actuator of claim 12, wherein the wiring access port includes at least five wire connections and/or wherein the wiring access port includes connections for actuator motor control.

14. The actuator of claim 1, wherein the component housing includes a seal recess configured to receive an L-shaped seal; and wherein the component cover includes a seal projection configured to mate with a portion of the L-shaped seal in the seal recess.

15. The actuator of claim 14, wherein the access panel includes a dual projection seal; wherein the dual projection seal includes two projections configured to mate with two recesses within the access panel; and wherein the access panel includes a seal lip configured to engage a portion of the dual projection seal distal from the two projections.
